# EUROPEAN PATENT SPECIFICATION

(11) **EP 3 991 115 B1**
(45) Date of publication and mention of the grant of the patent: **28.10.2026**
(21) Application number: 20733774.2
(22) Date of filing: 18.06.2020
(51) Int. Cl.: G06Q 10/20

(54) **MAINTENANCE HISTORY VISUALIZER TO FACILITATE SOLVING INTERMITTENT PROBLEMS**
WARTUNGSHISTORIE VISUALIZER ZUR ERLEICHTERUNG DER LÖSUNG INTERMITENTER PROBLEME
VISUALISEUR DE L'HISTORIQUE D'ENTRETIEN POUR FACILITER LA SOLUTION DE PROBLÉMES INTERMITTENTS

(30) Priority: 28.06.2019 US 201962868114 P
(43) Date of publication of application: 04.05.2022
(73) Proprietor: Koninklijke Philips N.V., 5656 AE Eindhoven (NL)
(72) Inventor: BARBIERI, Mauro, 5656 AE Eindhoven (NL); KORST, Johannes, Henricus, Maria, 5656 AE Eindhoven (NL); PRONK, Serverius, Petrus, Paulus, 5656 AE Eindhoven (NL); PETERS, Marc, Andre, 5656 AE Eindhoven (NL); GAO, Qi, 5656 AE Eindhoven (NL)
(74) Representative: Philips Intellectual Property & Standards
(86) International application number: PCT/EP2020/066903
(87) International publication number: WO 2020/260121

(56) References cited:
- WO-A1-2018/013666
- US-A1- 2008 056 071
- US-B1- 9 823 818

## Description

### FIELD

The following relates generally to the servicing and maintenance arts, especially as directed to medical imaging device servicing or the servicing of other complex systems, maintenance history analysis arts, and related arts.

### BACKGROUND

The maintenance of medical imaging systems (e.g., magnetic resonance (MR), positron emission tomography (PET), computed tomography (CT), interventional- X ray, etc.) is preferably proactive, rather than being reactive to unexpected failures. This can partly be realized by preventively replacing system parts that are statistically likely to fail in the near future. However, a certain fraction of failures cannot be predicted. These issues can only be solved by corrective maintenance: once the issue is discovered by active monitoring or reported by the customer, it should be solved as quickly as possible to reduce the unplanned downtime of these systems to a minimum. Preferably, the issue should be solved remotely, without needing a service engineer (SE, also referred to herein as a field SE (FSE), or a remote SE (RSE)) to visit the customer site (i.e. hospital). However, if a part has to be replaced, or if remote diagnosis is unsuccessful, then an on-site visit of a SE is usually necessary.

Possibly, the most difficult issues to solve are the so-called intermittent issues. The symptoms of these issues may occur sporadically, often at (apparently) unpredictable intervals. An intermittent problem typically does not lead to a complete system failure, but may cause a temporary reduced availability of some of its functionality. An intermittent issue may be visible at some point in time, while at a later point in time, the issue seems to have disappeared, only to re-emerge repeatedly again later at unexpected times, the next time possibly only next week or next month. The difficulty of intermittent issues is that they may not be visible remotely and that they may not be visible when a SE is visiting the hospital to diagnose the intermittent problem.

To diagnose an intermittent problem, review of the maintenance history may be useful. The maintenance history includes records of previous service cases (both scheduled, e.g. routine or preventative maintenance, and unscheduled servicing performed in response to specific problems) and also ancillary information such as customer complaints, parts replacements, and software upgrades, as well as the types of examinations that have been performed by the system in recent history. Each of these events is usually associated to a timestamp in the history of the system (e.g., a service case may have an "open" date and a "closed" date indicating when the maintenance matter was opened and when it was deemed to be resolved, respectively). In the case of medical imaging systems (as well as other complex systems such as commercial aircraft), an electronic service log is typically maintained for each system, with information contained in the service log being generated automatically and/or manually (e.g. by a SE entering a service report in freeform text, using a structured service report form, or a combination of these). Ancillary information such as timestamped records of pushed software upgrades may be stored in the service log, and/or may be stored in a different machine log.

The following discloses certain improvements to overcome these problems and others.

A document US9823818B1 relates to automatically generating and displaying a chronology of events, where events may be represented by data objects in one or more databases. Events/data objects may be identified as relevant to an investigation or analysis based on specified criteria. A timeline may be generated based on the identified set of relevant events, and interactive user interfaces may be generated and displayed that present the events as a timeline and a list. Events may be selected from the timeline or the list, may be identified as key events in the chronology, and additional events related to a selected event may be determined and added to the chronology. Timelines may be compared to other data sets, including other timelines, other event lists, and other relevant data.

A document US2008/056071A1 relates to providing an aggregate view of information that a user may need. A desktop assistant system collects information items that a user may need such as scheduling information and recently received messages. The desktop assistant system may also identify documents that the user may need and contacts with whom the user may need to communicate based on analysis of the collected scheduling information and the collected messages. The desktop assistant system then displays indications of the collected scheduling information, the collected messages, the identified documents, and the identified contacts so that the user has an integrated view of the needed information items.

A document WO2018/013666A1 discloses a medical device management system that includes a plurality of medical devices communicating with a local area network. A local network appliance forwards device data gathered from the medical devices to a cloud based service that processes and organizes the device data. The cloud based service may also be in communication with a sales database, an ERP system, a manufacturing database, and/or other databases. Users may request device data from the cloud based service using a conventional web browser. The device data may include location data, usage data, repair data, etc. In some cases, device data may come from a variety of sources and the cloud based service collates the multi-source data together into a set of records that form a digital replica of the actual medical device.

### SUMMARY

In one aspect, a non-transitory computer readable medium is provided, as defined in claim 1.

In another aspect, a service device is provided, as defined in claim 9.

In another aspect, a device service method is provided, as defined in claim 15.

One advantage resides in providing improved medical imaging device maintenance including cost savings by improved diagnostics, reducing the amount of unused parts, and reducing the number of service trips by a SE.

Another advantage resides in reducing the unnecessary replacement of parts of a medical imaging device.

Another advantage resides in reducing an amount of information for a SE to review to find relevant information for a service call.

Another advantage resides in removing information for a SE that is not relevant to a current service call.

Another advantage resides in providing a user interface for a SE to review information relevant to a service call.

Another advantage resides in providing dynamic feedback with respect to dependent sub-components of a medical imaging device, predicting necessity of carrying certain set of parts there by enhances service workflow as well as reducing system downtime at customer site.

A given embodiment may provide none, one, two, more, or all of the foregoing advantages, and/or may provide other advantages as will become apparent to one of ordinary skill in the art upon reading and understanding the present disclosure.

### BRIEF DESCRIPTION OF THE DRAWINGS

The disclosure may take form in various components and arrangements of components, and in various steps and arrangements of steps. The drawings are only for purposes of illustrating the preferred embodiments and are not to be construed as limiting the disclosure.
FIGURE 1 diagrammatically illustrates an illustrative system for predicting parts-dependencies for replacement of a device in accordance with the present disclosure.
FIGURE 2 shows exemplary flow chart operations of the system of FIGURE 1.
FIGURES 3A and 3B show examples of a graphical user interface (GUI) displayed on the system of FIGURE 1.

### DETAILED DESCRIPTION

Intermittent problems are particularly difficult to diagnose and fix, because they may not be symptomatic at the time of the current service call. Existing approaches usually involve the FSE accessing the service log to bring up a list of all prior service cases for the medical imaging device and manually sorting through to identify apparently relevant prior service cases. The search may extend to scheduled service cases and possibly also automatically pushed software updates unrelated to specific scheduled or unscheduled service cases.

However, this approach may not be effective for diagnosing an intermittent problem. The root cause of the intermittent problem is not known at the time of the diagnostic process; hence it may not be apparent which past service cases should be reviewed in order to elicit information about the problem. Furthermore, the intermittent nature of the problem means it may have been present, but unrecognized, at the time of a past service case. Hence, the fact that the SE who handled the past service case did not mention the problem does not mean it was not present at the time. Still further, the total quantity of information to be reviewed can be extensive, due to the complexity of a medical imaging device which may include tens of thousands of components interconnected to form variously interacting sub-systems and systems, along with associated software that is frequently updated to accommodate hardware changes, to install security patches, to add new features, to fix identified bugs, and so forth.

In some embodiments disclosed herein, a combination of automated relevance filtering of the unscheduled and scheduled service cases is provided, and a user interface including a displayed timeline of service cases satisfying a user-adjustable relevance threshold. In one example embodiment, the FSE selects case attributes manually using a hierarchical drop-down menu. These attributes are stored as part of the record of each service case (e.g., in the service log), so that the FSE-selected service case attributes for the current service case can be compared with the attributes selected for past service cases by the FSEs who handled those past service cases. In this case, a convenient comparison metric is to compare graphs (e.g., rooted trees) rooted trees representing the user selections for elements of the drop-down menu. (In other words, the graph topology matches the hierarchical menu topology, and nodes of the rooted tree correspond to user-entered menu selections).

In other embodiments disclosed herein, the service log is mined to extract attributes. The attributes will have various data types (text, integer, floating point, logical values, et cetera) and attributes of each data type are arranged into a feature vector. A comparison metric for each feature vector is generated, which are then combined to generate an overall comparison metric indicative of relevance of the prior case to the current case. Other approaches could be used, e.g. some combination of these two approaches.

The relevance metric is contemplated to be used to determine relevance of both scheduled and unscheduled service cases. The relevance of replacement parts is set equal to the relevance of the service case in which the part was replaced. This can also be the case for software updates performed as part of a service case.

On the other hand, software updates may be pushed over the Internet and/or a local area network without being associated with any particular service case - in this situation the pushed software update is either graded as to relevance using a software-specific relevance metric (for example, all software updates pertaining the sub-system exhibiting the intermittent problem are relevant) or there is no relevance grading and all software updates are shown.

The generated timeline displays cases chronologically, which is particularly useful for diagnosing intermittent problems. A "relevance" slider or the like is provided by which the user can adjust the relevance threshold selecting which cases to plot on the timeline (alternatively, all cases may be plotted but with the relevant cases highlighted in red or such). In illustrative embodiments, separate parallel timelines plot the scheduled cases, unscheduled cases, parts replacements, and software updates. By clicking on a particular service case, a pop-up window with additional details may be presented (and/or hovering the mouse over a case can bring up a smaller contextual pop-up bubble or so forth).

While especially useful for cases intermittent problems, the disclosed approaches can be used to more efficiently sort through past service cases in the context of any current service call. As disclosed herein, the approaches are used for servicing support for medical imaging devices, but could also be applicable to servicing of patient monitoring installations, and to servicing of complex systems generally, such as for commercial airliner servicing.

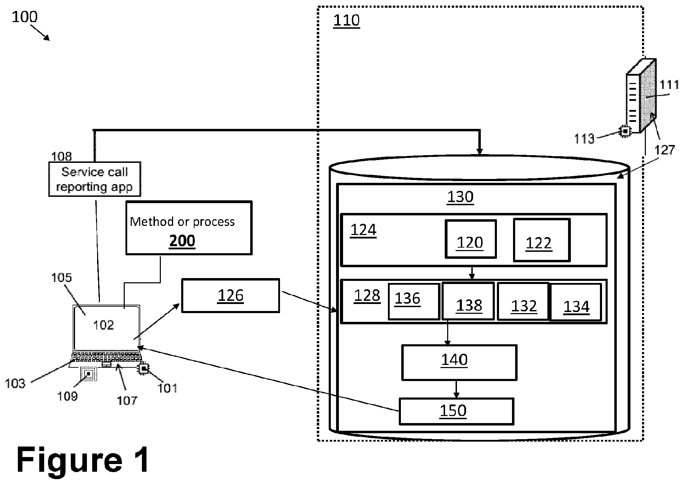

With reference to FIGURE 1, an illustrative servicing support system 100 for supporting a service engineer in servicing a device (e.g., a medical imaging device, not shown - also referred to as a medical device, an imaging device, imaging scanner, and variants thereof) is diagrammatically shown. By way of some non-limiting illustrative examples, the medical imaging device under service may be a magnetic resonance imaging (MRI) scanner, a computed tomography (CT) scanner, a positron emission tomography (PET) scanner, a gamma camera for performing single photon emission computed tomography (SPECT), an interventional radiology (IR) device, or so forth. As shown in FIGURE 1, the servicing support system **100** includes a service device **102** carried or accessed by a SE. The service device **102** can be a personal device, such as a mobile computer system such as a laptop or smart device. In other embodiments, the service device **102** may be an imaging system controller or computer integral with or operatively connected with the imaging device undergoing service (e.g., at a medical facility). As another example, the service device **102** may be a portable computer (e.g. notebook computer, tablet computer, or so forth) carried by an SE performing diagnosis of a fault with the imaging device and ordering of parts. In another example, the service device **102** may be the controller computer of the imaging device under service, or a computer based at the hospital. In other embodiments, the service device may be a mobile device such as a cellular telephone (cellphone) or tablet computer and the servicing support system **100** may be embodied as an "app" (application program). The service device **102** allows the service engineer to interact with the servicing support system via at least one user input device **103** such a mouse, keyboard or touchscreen. The service device further includes an electronic processer **101** and non-transitory storage medium **107** (internal components which are diagrammatically indicated in FIGURE 1). The non-transitory storage medium **107** stores instructions which are readable and executable by the electronic processor **101** to implement the servicing support system **100.** The service device **102** may also include a communication interface **109** such that the servicing support system **100** may communicate with a backend server or processing device **111,** which may optionally implement some aspects of the servicing support system **100** (e.g., the server **111** may have greater processing power and therefore be preferable for implementing computationally complex aspects of the servicing support system **100).** Such communication interfaces **109** include, for example, a wireless Wi-Fi or 4G interface, a wired Ethernet interface, or the like for connection to the Internet and/or an intranet. Some aspects of the servicing support system **100** may also be implemented by cloud processing or other remote processing.

In illustrative FIGURE 1, the servicing information collected using a service call reporting app **108** is fed to a database backend **110** (e.g., implemented at a medical facility or other remote center from where the SE is performing the service call, or at the imaging device vendor or other servicing contractor). For example, the database backend **110** may implement a service log for the medical imaging device. The backend processing is performed on the backend server **111** equipped with an electronic processor **113** (diagrammatically indicated internal component). The server **111** is equipped with non-transitory storage medium **127** (internal components which are diagrammatically indicated in FIGURE 1). While a single server computer is shown, it will be appreciated that the backend **110** may more generally be implemented on a single server computer, or a server cluster, or a cloud computing resource comprising ad hoc-interconnected server computers, or so forth.

The non-transitory storage medium **127** stores instructions executable by the electronic processor **113** of the backend server **111** to perform a device service support method or process **200** implemented by the servicing support system **100.** In some examples, the method **200** may be performed at least in part by cloud processing.

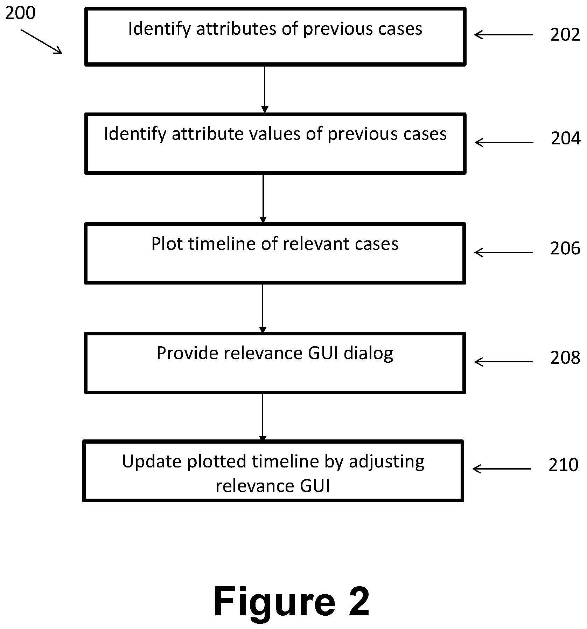

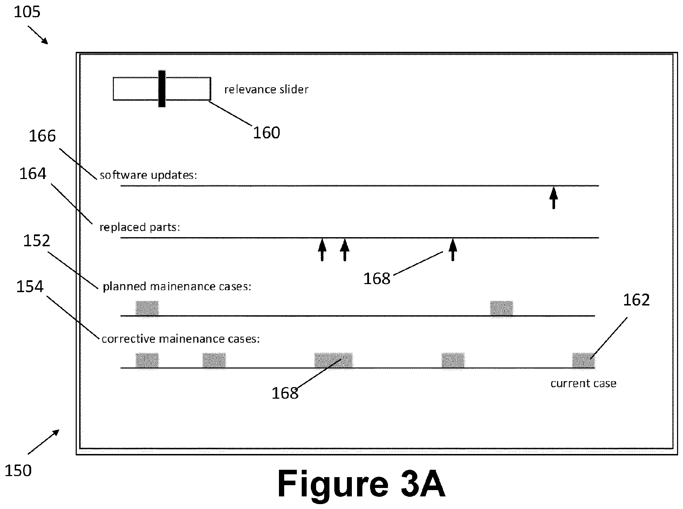

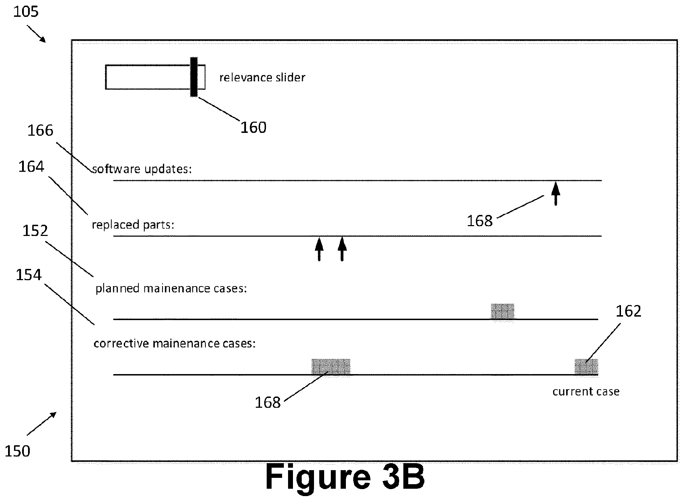

With reference to FIGURE 2, and with continuing reference to FIGURES 3-5 an illustrative embodiment of an instance of the device service support method **200** executable by the electronic processor **113** is diagrammatically shown as a flowchart.

At an operation **202,** attribute values **120** for attributes **122** of a plurality of previous service cases **124** for a device (e.g., an imaging device) are identified from a service log **130** retrieved from a database (e.g., the non-transitory storage medium **127).** An attribute can refer to a property of maintenance of the imaging device, and includes a corresponding value. For example, an attribute can be "calibration performed?" with the corresponding value being either "yes" or "no". In another example, the attribute can be "part <x> replaced?" with the value again being "yes" or "no". In a further example, the attribute might be a measurement (e.g., x-ray tube voltage) and the corresponding value would be a kV value (or perhaps <null> if the tube voltage was not measured in a prior service case). These can be stored as (attribute:value) pairs in the non-transitory computer readable medium **127.**

At an operation **204,** a set of relevant service cases **128** is identified from the retrieved previous service cases **124.** To do so, the attribute values **120** for the previous service cases **124** identified at **202** are compared to attribute values for a current service case **126** using a comparison metric **132** and a relevance threshold **134.**

In one example embodiment including operations **202** and **204,** the electronic processor **113** is programmed to perform operation **202** by mining the service log **130** to extract the attribute values **120** for the previous service cases **124.** The comparison operation **204** then includes, for each of a plurality of different data types (e.g., two or more of text, integer, floating point, and logical values), constructing feature vectors **136** storing the attribute values **120** for attributes **122** of that data type of the current service case **126** and the respective previous service cases **124.** Values are computed for a vector comparison metric **138** that compares the feature vectors **136** representing the attribute values **120** for the attributes **122** of that data type of the respective previous service cases **124** with the feature vector representing the attribute values for the attributes of that data type of the current service case **126.** The values of the feature vectors **136** are combined (i.e., summed) for the plurality of different data types to determine the set of relevant service cases **128.** In this manner, the set of attributes **122** defines the dimension of the feature vector in this embodiment (so if there are N attributes then the feature vector has length N, with each vector element storing the value of the corresponding attribute).

At an operation **206,** a timeline **150** of relevant service cases **140** of the set of relevance service cases **128** is plotted on the display device **105.** The timeline **150** represents a function of calendar dates of the relevant service cases. The calendar dates can include, for example, open service dates, close service dates, and include a bar running from the open date to the close date.

In some embodiments, the plotting operation **206** can include plotting additional timelines. In one example, a scheduled maintenance timeline **152** of relevant scheduled service cases of the set of relevant service cases **128** as a function of calendar dates of the relevant scheduled service cases is plotted on the display device **105.** In another example, an unscheduled maintenance timeline **154** of relevant unscheduled service cases of the set of relevant service cases **128** as a function of calendar dates of the relevant unscheduled service cases is plotted on the display device **105.** In examples where both the timelines **152** and **154** are plotted, these timelines have aligned time axes as shown on the display device **105.**

At an operation **208,** a relevance graphical user interface (GUI) dialog **160** is provided on the display device **105.** The relevance GUI dialog **160** allows for user adjustment of the relevance threshold via the at least one user input device **103.** As described in more detail with reference to FIGURES 3A and 3B, the relevance GUI dialog **160** can comprise a slider bar movable with a mouse **103.**

At an operation **210,** responsive to user adjustment of the relevance threshold via the relevance GUI dialog **160** (e.g., moving the slider bar with the mouse **103),** the identifying operation **204** and the plotting **206** operation are repeated to dynamically update the plotted timeline **150** on the basis of the user adjustment of the relevance threshold **134.**

In one example embodiment, a current service case description GUI dialog **162** can also be displayed on the display device **105.** The current service case description GUI dialog **162** is for constrained user input of the attribute values **122** for the current service case **126.** For example, the current service case description GUI dialog **162** can comprise drop-down lists or list boxes which list the possible values for an attribute **122.** Another example is a typed entry, for example a numerical value entry dialog that is limited to a single floating-point value, or to an integer value, or so forth. It will be appreciated that the drop-down lists define a finite set of attributes **122,** which simplifies comparison of cases. In some embodiments, the drop-down lists of the GUI dialog **162** are constructed hierarchically, so that the user is guided as to what attributes to provide. For example, a top-level (or upper level) of the hierarchy may specify the system being serviced (e.g., patient table, X-ray tube assembly, X-ray detector, et cetera), and based on this selection subsequent levels lower in the hierarchy are selected (e.g., selection of "X-ray tube assembly" as the attribute value for the "system being serviced" attribute may bring up lower level selections such as x-ray tube measurements and so forth; whereas selection of the "patient table" as the attribute value may bring up lower level selections directed to the patient table system; and so forth). This same GUI dialog **162** is provided for each service case, and the inputted (attribute:value) pairs for past service cases are stored in the service log **110.** In this embodiment, then, the operation **202** identifies the attribute values by retrieving these user inputted values from the service log **110.** The operation **204** can then use a comparison metric constructed as a graph (such as rooted tree) comparison metric, where the graph representing each service case has nodes in which each node is an (attribute:value) pair inputted by the SE, and the graph has links corresponding to the links of the hierarchy of the GUI dialog **162.** Since the same hierarchical GUI dialog **162** is used by each SE for inputting attribute values for each case, the graphs representing the attribute values for the past and current service cases inherently have the same underlying graph structure (though different attribute nodes will generally have been entered for each case). Advantageously, a rooted tree can have a direct correspondence with the drop-down list GUI dialog **162** from which it is derived.

Responsive to constrained user input of one or more attribute values **120** for the current service case **126,** the identifying operation **204** and the plotting operation **206** are repeated to dynamically update the plotted timeline **150** on the basis of the user input of the one or more attribute values for the current service case. In this embodiment, the comparing includes comparing a series of directed graphs. For example, a first directed graph is constructed representing the attribute values **120** for the current service case **126** as nodes of the directed graph. A second directed graph is constructed representing the attribute values **122** for the respective previous service cases **124** as nodes of the respective directed graphs. The respective directed graphs are compared such that the attribute values of the respective previous service cases are compared with the directed graph representing the attribute values of the current case using a graph comparison metric. In some examples, the respective directed graphs of the current case **126** and the previous service cases **124** can be analyzed or compared with directed graphs for other devices having similar directed graph using the comparison metric **132** and the relevance threshold **134.** An intermittent issue of a device of the current case **126** can be determined based on this analyzing or comparison.

In other embodiments, other information for the imaging device can be extracted from the service log **130.** In one example, timestamped records of part replacements for the imaging device are extracted from the service log **130** by associating each replacement part with a previous service case **124** based on its replacement timestamp falling between the opening and closing dates of the previous service case **124** (or by some other basis for association such as the service record for the previous service case **124** containing an explicit indication that the part was replaced during that service call). In this example, the plotting operation **206** further includes plotting representations **164** of the replacement parts associated with the plotted relevant service cases. In another example, software updates for the imaging device are extracted from the service log **130.** In this example, the plotting operation **206** includes plotting a timeline **166** of the software updates as a function of calendar dates of the software updates. The timeline of relevant service cases and the timeline of software updates have aligned time axes. Software updates are often pushed automatically, and hence may not be associated with any previous service call. Furthermore, software updates can sometimes encompass a number of different systems or have other broad impact. Accordingly, in some embodiments, all software updates are plotted, without regard to any relevance assessment.

FIGURES 3A and 3B show an example of the information displayed on the display device **105.** Referring to FIGURE 3A, the display device **105** shows the relevance GUI dialog **160** as a slider bar movable with the mouse **103.** The timeline **150** of relevant service cases **140** is also displayed, along with the scheduled maintenance timeline **152,** the unscheduled maintenance timeline **154,** the representations **164** of the replacement parts, and the timeline **166** of the software updates. The various timelines **150, 152, 164, 166** have aligned horizontal (time) axes, so that a vertical line crossing the four timelines corresponds to a single point in time. Each of these timelines includes symbols (e.g., boxes or arrows) comprising the current service case description GUI dialog **162** (e.g., implemented as drop-down lists or list boxes which list the possible values for an attribute **122** when selected via the user input device **103).**

Each of the timelines can include icons **168** representing previous services cases **140.** Icons **168** satisfying the comparison threshold can be indicated with color-coding or shading. In addition, upon selection of one of the icons **168,** a pop-up window can be displayed which includes information related to the selected icon.

As shown in FIGURE 3A, the slider bar is located on a central portion of the relevance GUI dialog **160.** Turning to FIGURE 3B, the slider bar has been moved (via the user input device **103)** to a "right" side of the relevance GUI dialog **160.** As a result, each of the displayed timelines includes fewer icons (i.e., the relevance threshold **134** has been increased, which reduces the number of relevant case relative to the relevance threshold). Comparing FIGURES 3A and 3B, the number of relevant cases on the representations 164 of the replacement parts has decreased from 3 relevant cases to 2 relevant cases; the number of relevant cases on the scheduled maintenance timeline **152** has decreased from 2 relevant cases to 1 relevant case; and the number of relevant cases on the timeline **150** of relevant service cases has decreased from 5 relevant cases to 2 relevant cases. The number or pattern of relevant service cases can also then be used to compare relative to other systems to find systems that have the same or similar pattern, which may be used to support the determination of the intermittent issue.

### EXAMPLE

The following discloses an illustrative embodiment of operations **202-210** in more detail. The ranking of the potentially relevant events in the history of a given system can be implemented as follows. A current case c is assumed to be predominantly specified by a SE by selecting one or more items in a hierarchical drop-down menu. These items represent, for example, symptoms observed or reported by a customer (e.g. image quality, error message on the screen, scan abort, etc.), subsystems that may be affected (e.g. monitor, gantry, image-reconstruction server, detector) as well as troubleshooting, testing and maintenance operations performed (e.g. tube calibration, current measurement, connectivity test, etc.). These items are typically organized in hierarchies. For example, an item about image quality issues can have sub-items about the type of issues (e.g. black screen, low brightness, lack of contrast, artefacts, noise, etc.).

A drop-down menu consists of items that can also be expanded as sub-menus. A SE can repeatedly navigate through the hierarchical drop-down menu by repeatedly expanding/collapsing sub-menus and selecting items. The SE can select "leaf items" (i.e., items that cannot be expanded as submenus), as well as submenu items themselves. Each (sub-)menu can be either single-option or multiple-option. For a single-option menu, at most one of its items can be selected, while for a multiple-option menu, zero, one, or more items can be selected.

The hierarchical drop-down menu can be modelled by a rooted tree *G = (V, E, r),* where V denotes a set of nodes and E denotes the set of edges (connections). The root r ∈ V is a specific node, relating to the starting view of the drop-down menu. The set *L* ⊆ *V* denotes the set of leaf nodes, i.e., the nodes that can be selected, but not expanded. By definition, the tree does not contain cycles, i.e., for each node *v* ∈ V, there is a unique path from root node r to node *v.* The unique path from root node r to a leaf node *v* goes via zero or more intermediate nodes that correspond to sub-menus.

After selecting all relevant items in the drop-down menu, the current case can be modelled by the labelled rooted tree G, where each node *v* ∈ G is labelled with a binary value *s(v)* ∈ {0,1}, with *s(v)* = 1 if and only if node *v* has been selected by the SE. The labelling of current case c is thus specified by mapping *s_{c}*: *V* → {0,1}. The labelling of a previous case c' is similarly specified by a mapping *s_{c'}*: *V* → {0,1}. Note that the set V can be assumed identical for these mappings, unless the drop-down menu has been extended/changed over time.

The relevance of a previous case c' in comparison to the current case c can now be determined by using a distance metric between mappings *s_{c}* and *s_{c'}.* A straightforward approach could be to assume that both cases have the same rooted tree and that the same set of vertices for both mappings are identically ordered, so that both mappings can be considered as binary strings of length |*V*|. Now, the distance could be simply defined as the number of positions at which the binary strings differ. Alternatively, one could only take into account the items that are selected in both cases.

In another embodiment, one could specify a distance metric that explicitly takes into account the hierarchy of the tree, such that for example, the distance from a node to the root node is taken into account to weigh the importance of equality of the respective node labels. Furthermore, the distance metric can be refined to take into account whether or not the respective items can be selected from a single-option menu or from a multiple-option menu. Additional elements can be added to quantify the distance between previous cases and a given current case. For example, the time distance could also be added as a term, so that, for example, the relevance of a previous case decreases if the time between this previous case and the current case becomes too large.

An appropriately chosen distance metric can be used to order the given set of previous cases in order of decreasing relevance. In this way, a sub-selection of relevant previous cases can be constructed by including only those previous cases in the timeline for which the relevance exceeds a given threshold *T.* A user of the smart history visualizer can use a slider, or a similar interaction option, to dynamically adapt the threshold *T.* In this way, more or fewer previous cases can be displayed. Alternatively, the threshold can be used to set the number of previous cases to show. In that case, one can always show *T* previous cases (whenever available), allowing previous cases to be added that in itself have a low relevance.

In some examples, the history of an imaging device is modelled as a sequence of events where each event is represented by a vector of features. Each event has a timestamp. The following categories of events are considered and mapped to feature types: previously reported issues (e.g., free text); previously replaced hardware components (e.g., a set of categorical items); a previously replaced software components (e.g., a set of categorical items); errors logged by the system (e.g., a set of categorical items); events such as reboots, etc. (e.g., a set of categorical items); parameter and sensor readings logged by the system (e.g., numerical); system configuration changes (e.g., set of categorical items); tests performed and results (e.g., set of categorical items, and numerical); and calibrations performed and results (e.g., a set of categorical items, and numerical).

A distance measure is defined for each category depending on the type of features and the category itself, including: previously reported issues (e.g., free text implemented as text similarity based on tfidf; previously replaced hardware components (e.g., a set of categorical items implemented as a combination of 0/1 similarity and Jaccard similarity; a previously replaced software components (e.g., set of categorical items implemented as a combination of 0/1 similarity and Jaccard similarity); errors logged by the system (e.g., a set of categorical items implemented as a combination of text similarity based on tfidf for the textual part of the errors and Jaccard similarity for the categorical properties of error events); system events such as reboots, etc. (e.g., a set of categorical items implemented as a combination of text similarity based on tfidf for the textual part of the errors and Jaccard similarity for the categorical properties of error events); parameter and sensor readings logged by the system (e.g., a numerical set implemented as a Euclidean distance between vectors of numerical parameters; and/or a correlation between time-series of sensor readings); a system configuration changes (e.g., a set of categorical items implemented as a Jaccard similarity); tests performed and results (e.g., a set of categorical items implemented as a combination of text similarity based on tfidf for the textual part of the errors and Jaccard similarity for the categorical properties of error events, and/or numerical items a Euclidean distance between vectors of numerical parameters; and/or a correlation between time-series of sensor readings); and calibrations performed and results (e.g., a set of categorical items implemented as a combination of text similarity based on tfidf for the textual part of the errors and Jaccard similarity for the categorical properties of error events, and/or numerical items a Euclidean distance between vectors of numerical parameters; and/or a correlation between time-series of sensor readings).

In this embodiment, the relevance of an event is calculated by combining the nine distance measures above, or a subset of them. The combination can be based on a weighted average or a multiplication.

In addition to showing previous cases, the history could show additional events, such as software updates, previous part replacements, etc. Some of these additional events can be chosen to always be shown, especially if these events are relatively rare and happened recently. For some of these additional events, the relevance can be also determined explicitly. For example, previous part replacements can be linked to subsystems, and symptoms that led to their replacement in the past could be directly linked to the symptoms that appear in the hierarchical drop-down menu. Furthermore, the user can explicitly make these additional events visible or invisible, depending on the occasion and depending on the type of additional event.

A non-transitory storage medium includes any medium for storing or transmitting information in a form readable by a machine (e.g., a computer). For instance, a machine-readable medium includes read only memory ("ROM"), solid state drive (SSD), flash memory, or other electronic storage medium; a hard disk drive, RAID array, or other magnetic disk storage media; an optical disk or other optical storage media; or so forth.

The methods illustrated throughout the specification, may be implemented as instructions stored on a non-transitory storage medium and read and executed by a computer or other electronic processor.

The disclosure has been described with reference to the preferred embodiments. Modifications and alterations may occur to others upon reading and understanding the preceding detailed description.

## Claims

1. A non-transitory computer readable medium **(107, 127)** storing instructions readable and executable by at least one electronic processor **(101, 113)** operatively connected with a display **(105)** and at least one user input device **(103)** to perform a device service support method **(200),** the method comprising:
identifying attribute values **(120)** for attributes **(122)** of a plurality of previous service cases **(124)** from a service log **(130)** retrieved from a database **(127);**
extracting replacement parts from the service log **(130)** including associating each replacement part with a previous service case **(124);**
identifying a set of relevant service cases **(128)** from the plurality of previous service cases by comparing the identified attribute values for the previous service cases with attribute values for a current service case **(126)** using a comparison metric **(132)** and a relevance threshold **(134);**
plotting, on the display **(105),** a timeline **(150)** of relevant service cases **(140)** of the set of relevant service cases as a function of calendar dates of the relevant service cases, wherein the plotting includes:
plotting, on the display **(105),** a scheduled maintenance timeline **(152)** of relevant scheduled service cases of the set of relevant service cases **(128)** as a function of calendar dates of the relevant scheduled service cases;
plotting, on the display **(105),** an unscheduled maintenance timeline **(154)** of relevant unscheduled service cases of the set of relevant service cases as a function of calendar dates of the relevant unscheduled service cases; and
plotting representations **(164)** of the replacement parts associated with the plotted relevant service cases **(128);**
wherein the scheduled maintenance timeline and the unscheduled maintenance timeline have aligned time axes;
providing a relevance graphical user interface (GUI) dialog **(160)** for user adjustment of the relevance threshold via the at least one user input device; and
responsive to user adjustment of the relevance threshold via the relevance GUI dialog, repeating the identifying and plotting to dynamically update the plotted timeline on the basis of the user adjustment of the relevance threshold.

2. The non-transitory computer readable medium **(107, 127)** according to claim 1, wherein the method (200) further includes:
providing a current service case description GUI dialog **(162)** for constrained user input of the attribute values **(120)** for the current service case **(126);** and
responsive to constrained user input of one or more attribute values for the current service case, repeating the identifying and plotting to dynamically update the plotted timeline **(150)** on the basis of the user input of the one or more attribute values for the current service case.

3. The non-transitory computer readable medium **(107, 127)** according to claim 2, wherein the comparing includes:
constructing a directed graph representing the attribute values **(120)** for the current service case **(126)** as nodes of the directed graph;
constructing directed graphs representing the attribute values for the respective previous service cases **(124)** as nodes of the respective directed graphs; and
comparing the respective directed graphs representing the attribute values of the respective previous service cases with the directed graph representing the attribute values of the current case using a graph comparison metric.

4. The non-transitory computer readable medium **(107, 127)** according to claim 1, wherein the method **(200)** further includes:
analyzing the respective directed graphs of the current case **(126)** and the previous service cases **(124)** with directed graphs for other devices having similar directed graph using the comparison metric **(132)** and the relevance threshold **(134);**
determining an intermittent issue of a device of the current case based on the analyzing.

5. The non-transitory computer readable medium **(107, 127)** according to claim 1, wherein the method **(200)** further includes:
mining the service log **(130)** to extract the attribute values **(120)** for the previous service cases **(124).**

6. The non-transitory computer readable medium **(107, 127)** according to claim 5, wherein the comparing includes:
for each of a plurality of different data types:
constructing feature vectors **(136)** storing the attribute values **(120)** for attributes **(122)** of that data type of the current service case **(126)** and the respective previous service cases **(124);** and
computing values of a vector comparison metric **(138)** comparing the feature vectors representing the attribute values for the attributes of that data type of the respective previous service cases with the feature vector representing the attribute values for the attributes of that data type of the current case; and
combining the values of the vector comparison metrics for the plurality of different data types.

7. The non-transitory computer readable medium **(107, 127)** of claim 6, wherein the plurality of different data types includes two or more of text, integer, floating point, and logical values.

8. The non-transitory computer readable medium **(107, 127)** according to any one of claims 1-7, wherein the method **(200)** further includes:
extracting software updates from the service log **(130);**
wherein the plotting includes plotting a timeline **(160)** of the software updates on the display **(105)** as a function of calendar dates of the software updates;
wherein the timeline of relevant service cases and the timeline of software updates have aligned time axes.

9. A service device **(102),** comprising:
a display device **(105);**
at least one user input device **(103);** and
at least one electronic processor **(101)** programmed to:
identify attribute values **(120)** for attributes **(122)** of a plurality of previous service cases **(124)** from a service log **(130)** retrieved from a database **(127)** as a function of calendar dates of the relevant service cases **(128);**
extract replacement parts from the service log **(130)** and associate each replacement part with a previous service case **(124);**
identify a set of relevant service cases **(128)** from the plurality of previous service cases by a comparison of the identified attribute values for the previous service cases with attribute values for a current service case **(126)** using a comparison metric **(132)** and a relevance threshold **(134);**
plot, on the display device **(105),** a timeline **(150)** of relevant service cases **(140)** of the set of relevant service cases as a function of calendar dates of the relevant service cases, wherein the plotting includes:
plot, on the display device **(105),** a scheduled maintenance timeline **(152)** of relevant scheduled service cases of the set of relevant service cases **(128)** as a function of calendar dates of the relevant scheduled service cases;
plot, on the display device **(105),** an unscheduled maintenance timeline **(154)** of relevant unscheduled service cases of the set of relevant service cases as a function of calendar dates of the relevant unscheduled service cases; and
plot representations **(164)** of the replacement parts associated with the plotted relevant service cases **(128);**
wherein the scheduled maintenance timeline and the unscheduled maintenance timeline have aligned time axes;
display, on the display device **(105),** the generated timeline of service cases and a relevance graphical user interface (GUI) dialog **(160)** for user adjustment of the relevance threshold via at least one user input device **(103);** and
responsive to user adjustment of the relevance threshold via the relevance GUI dialog, repeating the identifying and plotting to dynamically update the plotted timeline on the basis of the user adjustment of the relevance metric.

10. The service device **(102)** according to claim 9, wherein the relevance GUI dialog **(160)** includes:
a slider bar configured to, upon selection via the at least one user input device **(103),** adjust the relevance threshold **(134)** between attributes **(122)** of the current service case **(126)** and attributes of the previous service cases **(124).**

11. The service device **(102)** according to claim 10, wherein, upon adjustment of the relevance threshold **(134)** via the slider bar, the timeline **(150)** is configured to expand or contract as displayed on the display device **(105).**

12. The service device **(102)** according to any one of claims 9-11, wherein the timeline **(150)** comprises:
icons **(168)** indicative of the previous services cases;
wherein the icons satisfying the comparison threshold include color-coding or shading.

13. The service device **(102)** according to claim 12, wherein upon selection of an icon **(168)** of the timeline **(150)** via the at least one user input device **(103),** the at least one electronic processor **(101)** is programmed to:
generate, for display on the display device **(105),** a window including information related to the selected icon.

14. The service device **(102)** according to claim 9, wherein the at least one electronic processor **(101)** is programmed to:
control the display device **(105)** to display software updates **(166)** as a function of calendar dates of the software updates.
wherein the timeline of relevant service cases **(128)** and the timeline of software updates have aligned time axes.

15. A device service method **(200),** comprising:
identifying attribute values **(120)** for attributes **(122)** of a plurality of previous service cases **(124)** from a service log **(130)** retrieved from a database **(127);**
identifying a set of relevant service cases **(128)** from the plurality of previous service cases by comparing the identified attribute values for the previous service cases with attribute values for a current service case **(126)** using a comparison metric **(132)** and a relevance threshold **(134);**
extracting replacement parts from the service log **(130)** including associating each replacement part with a previous service case **(124);**
plotting, on a display device **(105),** a timeline **(150)** of relevant service cases of the set of relevant service cases as a function of calendar dates of the relevant service cases, the timeline including at least (i) a scheduled maintenance timeline **(152)** of relevant scheduled service cases of the set of relevant service cases as a function of calendar dates of the relevant scheduled service cases, (ii) an unscheduled maintenance timeline **(154)** of relevant unscheduled service cases of the set of relevant service cases as a function of calendar dates of the relevant unscheduled service cases, and plotting representations **(164)** of the replacement parts associated with the plotted relevant service cases **(128),** wherein the scheduled maintenance timeline and the unscheduled maintenance timeline have aligned time axes;
providing, on the display device, a relevance graphical user interface (GUI) dialog **(160)** for user adjustment of the relevance threshold via at least one user input device **(103);** and
responsive to user adjustment of the relevance threshold via the relevance GUI dialog, repeating the identifying and plotting to dynamically update the plotted timeline on the basis of the user adjustment of the relevance metric.

## Patentansprüche

1. Nichtflüchtiges, computerlesbares Medium **(107, 127)** , das Anweisungen speichert, die von mindestens einem elektronischen Prozessor **(101, 113)** lesbar und ausführbar sind, der funktionsfähig mit einer Anzeige **(105)** und mindestens einer Eingabevorrichtung **(103)** verbunden ist, um ein Vorrichtungsserviceunterstützungsverfahren **(200)** durchzuführen, wobei das Verfahren Folgendes umfasst:
Identifizieren von Attributwerten **(120)** für Attribute **(122)** einer Vielzahl von vorherigen Servicefällen **(124)** aus einem Serviceprotokoll **(130)** , das aus einer Datenbank **(127)** abgerufen wird;
Extrahieren von Ersatzteilen aus dem Serviceprotokoll **(130)** , einschließlich des Zuordnens von jedem Ersatzteil zu einem vorherigen Servicefall **(124);**
Identifizieren einer Menge relevanter Servicefälle **(128)** aus der Vielzahl von vorherigen Servicefällen durch Vergleichen der identifizierten Attributwerte für die vorherigen Servicefälle mit Attributwerten für einen aktuellen Servicefall **(126)** unter Verwendung einer Vergleichsmetrik **(132)** und eines Relevanzschwellenwerts **(134);**
Darstellen einer Zeitleiste **(150)** der relevanten Servicefälle **(140)** der Menge relevanter Servicefälle auf der Anzeige **(105)** als Funktion von Kalenderdaten der relevanten Servicefälle, wobei das Darstellen Folgendes einschließt:
Darstellen einer geplanten Wartungszeitleiste **(152)** relevanter geplanter Servicefälle aus der Menge relevanter Servicefälle **(128)** auf der Anzeige **(105)** als Funktion von Kalenderdaten der relevanten geplanten Servicefälle;
Darstellen einer außerplanmäßigen Wartungszeitleiste **(154)** relevanter außerplanmäßiger Servicefälle aus der Menge relevanter Servicefälle auf der Anzeige **(105)** als eine Funktion von Kalenderdaten der relevanten außerplanmäßigen Servicefälle; und
Darstellen von Darstellungen **(164)** der Ersatzteile, die den dargestellten relevanten Servicefällen **(128)** zugeordnet sind;
wobei die geplante Wartungszeitleiste und die außerplanmäßige Wartungszeitleiste aufeinander abgestimmte Zeitachsen aufweisen;
Bereitstellen eines relevanten grafischen Benutzerschnittstellen (GUI)-Dialogs **(160)** zur Benutzeranpassung des Relevanzschwellenwerts über die mindestens eine Eingabevorrichtung; und
als Reaktion auf die Benutzeranpassung des Relevanzschwellenwerts über den relevanten GUI-Dialog, Wiederholen des Identifizierens und Darstellens, um die dargestellte Zeitleiste auf der Grundlage der Benutzeranpassung des Relevanzschwellenwerts dynamisch zu aktualisieren.

2. Nicht-transitorisches computerlesbares Medium **(107, 127)** nach Anspruch 1, wobei das Verfahren **(200)** weiter Folgendes einschließt:
Bereitstellen eines aktuellen Servicefallbeschreibungs-GUI-Dialogfelds **(162)** zur eingeschränkten Benutzereingabe der Attributwerte **(120)** für den aktuellen Servicefall **(126);** und
als Reaktion auf eine eingeschränkte Benutzereingabe eines oder mehrerer Attributwerte für den aktuellen Servicefall, Wiederholen des Identifizierens und Darstellens, um die dargestellte Zeitleiste **(150)** auf der Grundlage der Benutzereingabe des einen oder der mehreren Attributwerte für den aktuellen Servicefall dynamisch zu aktualisieren.

3. Nicht-transitorisches computerlesbares Medium **(107, 127)** nach Anspruch 2, wobei das Vergleichen Folgendes einschließt:
Erstellen eines gerichteten Graphen, der die Attributwerte **(120)** für den aktuellen Servicefall **(126)** als Knoten des gerichteten Graphen darstellt;
Erstellen gerichteter Graphen, die die Attributwerte der jeweiligen vorherigen Servicefälle **(124)** als Knoten der jeweiligen gerichteten Graphen darstellen; und
Vergleichen der jeweiligen gerichteten Graphen, die die Attributwerte der jeweiligen vorherigen Servicefälle darstellen, mit dem gerichteten Graphen, der die Attributwerte des aktuellen Falls darstellt, unter Verwendung einer Graphenvergleichsmetrik.

4. Nicht-transitorisches computerlesbares Medium **(107, 127)** nach Anspruch 1, wobei das Verfahren **(200)** weiter Folgendes einschließt:
Analysieren der jeweiligen gerichteten Graphen des aktuellen Falls **(126)** und der vorherigen Servicefälle **(124)** mit gerichteten Graphen für andere Vorrichtungen, die einen ähnlichen gerichteten Graphen aufweisen, unter Verwendung der Vergleichsmetrik **(132)** und des Relevanzschwellenwerts **(134);**
Bestimmen eines zeitweiligen Problems einer Vorrichtung des aktuellen Falls basierend auf dem Analysieren.

5. Nicht-transitorisches computerlesbares Medium **(107, 127)** nach Anspruch 1, wobei das Verfahren **(200)** weiter Folgendes einschließt:
Auswerten des Serviceprotokolls **(130)** zum Extrahieren der Attributwerte **(120)** für die vorherigen Servicefälle **(124).**

6. Nicht-transitorisches computerlesbares Medium **(107, 127)** nach Anspruch 5, wobei das Vergleichen Folgendes einschließt:
für jeden einer Vielzahl von verschiedenen Datentypen:
Erstellen von Merkmalsvektoren **(136)** , die die Attributwerte **(120)** für Attribute **(122)** dieses Datentyps des aktuellen Servicefalls **(126)** und der jeweiligen vorherigen Servicefälle **(124)** speichern; und
Berechnen von Werten einer Vektorvergleichsmetrik **(138)** , durch Vergleichen der Merkmalsvektoren, die die Attributwerte für die Attribute dieses Datentyps der jeweiligen vorherigen Servicefälle darstellen, mit dem Merkmalsvektor, der die Attributwerte für die Attribute dieses Datentyps des aktuellen Falls darstellt; und
Kombinieren der Werte der Vektorvergleichsmetriken für die Vielzahl von verschiedenen Datentypen.

7. Nichtflüchtiges computerlesbares Medium **(107, 127)** nach Anspruch 6, wobei die Vielzahl von verschiedenen Datentypen zwei oder mehr von Text, Ganzzahl, Gleitkomma und logischen Werten einschließt.

8. Nicht-transitorisches computerlesbares Medium **(107, 127)** nach einem der Ansprüche 1-7, wobei das Verfahren **(200)** weiter Folgendes einschließt:
Extrahieren von Software-Updates aus dem Serviceprotokoll **(130);**
wobei das Darstellen das Erstellen einer Zeitleiste **(160)** der Software-Updates auf der Anzeige **(105)** als eine Funktion von Kalenderdaten der Software-Updates einschließt;
wobei die Zeitleiste der relevanten Servicefälle und die Zeitleiste der Software-Updates aufeinander abgestimmte Zeitachsen aufweisen.

9. Servicevorrichtung **(102)** , umfassend:
eine Anzeigevorrichtung **(105);**
mindestens eine Benutzereingabevorrichtung **(103);** und
mindestens einen elektronischen Prozessor **(101)** , der zu Folgendem programmiert ist:
Identifizieren von Attributwerten **(120)** für Attribute **(122)** einer Vielzahl von vorherigen Servicefällen **(124)** aus einem Serviceprotokoll **(130)** , das aus einer Datenbank **(127)** als eine Funktion von Kalenderdaten der relevanten Servicefälle **(128)**abgerufen wird;
Extrahieren von Ersatzteilen aus dem Serviceprotokoll **(130)** , und Zuordnen von jedem Ersatzteil zu einem vorherigen Servicefall **(124);**
Identifizieren einer Menge relevanter Servicefälle **(128)** aus der Vielzahl von vorherigen Servicefällen durch einen Vergleich der identifizierten Attributwerte für die vorherigen Servicefälle mit Attributwerten für einen aktuellen Servicefall **(126)** unter Verwendung einer Vergleichsmetrik **(132)** und eines Relevanzschwellenwerts **(134);**
Darstellen einer Zeitleiste **(150)** der relevanten Servicefälle **(140)** der Menge relevanter Servicefälle auf der Anzeigevorrichtung **(105)** als Funktion von Kalenderdaten der relevanten Servicefälle, wobei das Darstellen Folgendes einschließt:
Darstellen einer geplanten Wartungszeitleiste **(152)** relevanter geplanter Servicefälle aus der Menge relevanter Servicefälle **(128)** auf der Anzeigevorrichtung **(105)** als Funktion von Kalenderdaten der relevanten geplanten Servicefälle;
Darstellen einer außerplanmäßigen Wartungszeitleiste **(154)** relevanter außerplanmäßiger Servicefälle aus der Menge relevanter Servicefälle auf der Anzeigevorrichtung **(105)** als Funktion von Kalenderdaten der relevanten außerplanmäßigen Servicefälle; und
Darstellen von Darstellungen **(164)** der Ersatzteile, die den dargestellten relevanten Servicefällen **(128)** zugeordnet sind;
wobei die geplante Wartungszeitleiste und die außerplanmäßige Wartungszeitleiste aufeinander abgestimmte Zeitachsen aufweisen;
Anzeige der erzeugten Zeitleiste von Servicefällen auf der Anzeigevorrichtung **(105)** und eines relevanten grafischen Benutzerschnittstellen (GUI)-Dialogs **(160)** zur Benutzeranpassung des Relevanzschwellenwerts über mindestens eine Eingabevorrichtung **(103);** und
als Reaktion auf die Benutzeranpassung des Relevanzschwellenwerts über den relevanten GUI-Dialog, Wiederholen des Identifizierens und Darstellens, um die dargestellte Zeitleiste auf der Grundlage der Benutzeranpassung der Relevanzmetrik dynamisch zu aktualisieren.

10. Servicevorrichtung **(102)** nach Anspruch 9, wobei der relevante GUI-Dialog **(160)** Folgendes einschließt:
einen Schieberegler, der so ausgebildet ist, dass er bei Auswahl über die mindestens eine Benutzereingabevorrichtung **(103)** den Relevanzschwellenwert **(134)** zwischen den Attributen **(122)** des aktuellen Servicefalls **(126)** und den Attributen der vorherigen Servicefälle **(124)** anpasst.

11. Servicevorrichtung **(102)** nach Anspruch 10, wobei die Zeitleiste **(150)** so ausgebildet ist, dass sie sich bei Anpassung des Relevanzschwellenwerts **(134)** über den Schieberegler auf der Anzeigevorrichtung **(105)** expandiert oder zusammenzieht.

12. Servicevorrichtung **(102)** nach einem der Ansprüche 9-11, wobei die Zeitleiste **(150)** umfasst:
Symbole **(168)** , die auf vorherige Servicefälle hinweisen;
wobei die Symbole, die den Vergleichsschwellenwert erfüllen, eine Farbcodierung oder Schattierung einschließen.

13. Servicevorrichtung **(102)** nach Anspruch 12, wobei bei Auswahl eines Symbols **(168)** der Zeitleiste **(150)** über die mindestens eine Benutzervorrichtung **(103)** der mindestens eine Prozessor **(101)** zu Folgendem ausgebildet ist:
Erzeugen eines Fensters, das Informationen in Zusammenhang mit dem ausgewählten Symbol einschließt, zur Anzeige auf der Anzeigevorrichtung **(105).**

14. Servicevorrichtung **(102)** nach Anspruch 9, wobei der mindestens eine elektronische Prozessor **(101)** zu Folgendem programmiert ist:
Steuern der Anzeigevorrichtung **(105)** , um Software-Updates **(166)** in Abhängigkeit von den Kalenderdaten der Software-Updates anzuzeigen.
wobei die Zeitleiste der relevanten Servicefälle **(128)** und die Zeitleiste der Software-Updates aufeinander abgestimmte Zeitachsen aufweisen.

15. Vorrichtungsserviceverfahren **(200),** umfassend:
Identifizieren von Attributwerten **(120)** für Attribute **(122)** einer Vielzahl von vorherigen Servicefällen **(124)** aus einem Serviceprotokoll **(130)** , das aus einer Datenbank **(127)** abgerufen wird;
Identifizieren einer Menge relevanter Servicefälle **(128)** aus der Vielzahl von vorherigen Servicefällen durch Vergleichen der identifizierten Attributwerte für die vorherigen Servicefälle mit Attributwerten für einen aktuellen Servicefall **(126)** unter Verwendung einer Vergleichsmetrik **(132)** und eines Relevanzschwellenwerts **(134);**
Extrahieren von Ersatzteilen aus dem Serviceprotokoll **(130)** , einschließlich des Zuordnens von jedem Ersatzteil zu einem vorherigen Servicefall **(124);**
Darstellen einer Zeitleiste **(150)** von relevanten Servicefällen der Menge relevanter Servicefälle auf der Anzeigevorrichtung **(105)** als Funktion von Kalenderdaten der relevanten Servicefälle, wobei die Zeitleiste mindestens (i) eine geplante Wartungszeitleiste **(152)** relevanter geplanter Servicefälle aus der Menge relevanter Servicefälle als Funktion von Kalenderdaten der relevanten geplanten Servicefälle, (ii) eine außerplanmäßige Wartungszeitleiste **(154)** relevanter außerplanmäßiger Servicefälle aus der Menge relevanter Servicefälle als Funktion von Kalenderdaten der relevanten außerplanmäßigen Servicefälle, und Darstellen von Darstellungen **(164)** der Ersatzteile, die den dargestellten relevanten Servicefällen **(128)** zugeordnet sind, einschließt, wobei die geplante Wartungszeitleiste und die außerplanmäßige Wartungszeitleiste aufeinander abgestimmte Zeitachsen aufweisen;
Bereitstellen eines relevanten grafischen Benutzerschnittstellen (GUI)-Dialogs **(160)** zur Benutzeranpassung des Relevanzschwellenwerts auf der Anzeigevorrichtung über mindestens eine Eingabevorrichtung **(103);** und
als Reaktion auf die Benutzeranpassung des Relevanzschwellenwerts über den relevanten GUI-Dialog, Wiederholen des Identifizierens und Darstellens, um die dargestellte Zeitleiste auf der Grundlage der Benutzeranpassung der Relevanzmetrik dynamisch zu aktualisieren.

## Revendications

1. Support lisible par ordinateur non transitoire **(107, 127)** stockant des instructions lisibles et exécutables par au moins un processeur électronique **(101, 113)** connecté fonctionnellement à un affichage **(105)** et à au moins un dispositif d'entrée utilisateur **(103)** pour réaliser un procédé de support de service de dispositif **(200),** le procédé comprenant :
l'identification de valeurs d'attribut **(120)** pour des attributs **(122)** d'une pluralité de cas de service précédents **(124)** à partir d'un journal de service **(130)** récupéré à partir d'une base de données **(127) ;**
l'extraction de pièces de rechange à partir du journal de service **(130)** incluant l'association de chaque pièce de rechange à un cas de service précédent **(124) ;**
identifier un ensemble de cas de service pertinents **(128)** à partir de la pluralité de cas de service précédents en comparant les valeurs d'attribut identifiées pour les cas de service précédents avec des valeurs d'attribut pour un cas de service actuel **(126)** en utilisant une métrique de comparaison **(132)** et un seuil de pertinence **(134) ;**
le traçage, sur l'affichage **(105),** d'une chronologie **(150)** de cas de service pertinents **(140)** de l'ensemble de cas de service pertinents en fonction de dates calendaires des cas de service pertinents, dans lequel le traçage inclut :
le traçage, sur l'affichage **(105),** d'une chronologie de maintenance planifiée **(152)** de cas de service planifiés pertinents de l'ensemble de cas de service pertinents **(128)** en fonction de dates calendaires des cas de service planifiés pertinents ;
le traçage, sur l'affichage **(105),** d'une chronologie de maintenance non planifiée **(154)** de cas de service non planifiés pertinents de l'ensemble de cas de service pertinents en fonction de dates calendaires des cas de service non planifiés pertinents ; et
le traçage de représentations **(164)** des pièces de rechange associées aux cas de service pertinents tracés **(128) ;**
dans lequel la chronologie de maintenance planifiée et la chronologie de maintenance non planifiée présentent des axes temporels alignés ;
la fourniture d'une boîte de dialogue **(160)** d'interface utilisateur graphique (GUI) de pertinence pour l'ajustement par l'utilisateur du seuil de pertinence par l'intermédiaire de l'au moins un dispositif d'entrée utilisateur ; et
en réponse à l'ajustement par l'utilisateur du seuil de pertinence par l'intermédiaire de la boîte de dialogue GUI de pertinence, la répétition de l'identification et du traçage pour mettre à jour dynamiquement la chronologie tracée sur la base de l'ajustement par l'utilisateur du seuil de pertinence.

2. Support lisible par ordinateur non transitoire **(107, 127)** selon la revendication 1, dans lequel le procédé **(200)** inclut en outre :
la fourniture d'une boîte de dialogue GUI de description du cas de service actuel **(162)** pour une entrée utilisateur contrainte des valeurs d'attribut **(120)** pour le cas de service actuel **(126) ;** et
en réponse à l'entrée utilisateur contrainte d'une ou de plusieurs valeurs d'attribut pour le cas de service actuel, la répétition de l'identification et du traçage pour mettre à jour dynamiquement la chronologie tracée **(150)** sur la base de l'entrée utilisateur de l'une ou des plusieurs valeurs d'attribut pour le cas de service actuel.

3. Support lisible par ordinateur non transitoire **(107, 127)** selon la revendication 2, dans lequel la comparaison inclut :
la construction d'un graphe orienté représentant les valeurs d'attribut **(120)** pour le cas de service actuel **(126)** en tant que nœuds du graphe orienté ;
la construction de graphes orientés représentant les valeurs d'attribut pour les cas de service précédents respectifs **(124)** en tant que nœuds des graphes orientés respectifs ; et
la comparaison des graphes orientés respectifs représentant les valeurs d'attribut de cas de service précédents respectifs avec le graphe orienté représentant les valeurs d'attribut du cas actuel en utilisant une métrique de comparaison de graphe.

4. Support lisible par ordinateur non transitoire **(107, 127)** selon la revendication 1, dans lequel le procédé **(200)** inclut en outre :
l'analyse des graphes orientés respectifs du cas actuel **(126)** et des cas de service précédents **(124)** avec des graphes orientés pour d'autres dispositifs présentant un graphe orienté similaire en utilisant la métrique de comparaison **(132)** et le seuil de pertinence **(134) ;**
la détermination d'un problème intermittent d'un dispositif du cas présent sur la base de l'analyse.

5. Support lisible par ordinateur non transitoire **(107, 127)** selon la revendication 1, dans lequel le procédé **(200)** inclut en outre :
l'exploration du journal de service **(130)** pour extraire les valeurs d'attribut **(120)** pour les cas de service précédents **(124).**

6. Support lisible par ordinateur non transitoire **(107, 127)** selon la revendication 5, dans lequel la comparaison inclut :
pour chacun d'une pluralité de types de données différents :
la construction de vecteurs de caractéristique **(136)** stockant les valeurs d'attribut **(120)** pour des attributs **(122)** de ce type de données du cas de service actuel **(126)** et des cas de service précédents respectifs **(124) ;** et
le calcul de valeurs d'une métrique de comparaison vectorielle **(138)** comparant les vecteurs de caractéristique représentant les valeurs d'attribut pour les attributs de ce type de données des cas de service précédents respectifs avec le vecteur de caractéristique représentant les valeurs d'attribut pour les attributs de ce type de données du cas actuel ; et
la combinaison des valeurs des métriques de comparaison vectorielle pour la pluralité de types de données différents.

7. Support lisible par ordinateur non transitoire **(107, 127)** selon la revendication 6, dans lequel la pluralité de types de données différents inclut deux ou plusieurs parmi des valeurs de texte, d'entier, à virgule flottante et logiques.

8. Support lisible par ordinateur non transitoire **(107, 127)** selon l'une quelconque des revendications 1-7, dans lequel le procédé **(200)** inclut en outre :
l'extraction de mises à jour logicielles à partir du journal de service **(130) ;**
dans lequel le traçage inclut le traçage d'une chronologie **(160)** des mises à jour logicielles sur l'affichage **(105)** en fonction de dates calendaires des mises à jour logicielles ;
dans lequel la chronologie des cas de service pertinents et la chronologie de mises à jour logicielles présentent des axes temporels alignés.

9. Dispositif de service **(102),** comprenant :
un dispositif d'affichage **(105) ;**
au moins un dispositif d'entrée utilisateur **(103) ;** et
au moins un processeur électronique **(101)** programmé pour :
identifier des valeurs d'attribut **(120)** pour des attributs **(122)** d'une pluralité de cas de service précédents **(124)** à partir d'un journal de service **(130)** récupéré à partir d'une base de données **(127)** en fonction de dates calendaires des cas de service pertinents **(128) ;**
extraire des pièces de rechange à partir du journal de service **(130)** et associer chaque pièce de rechange à un cas de service précédent **(124) ;**
identifier un ensemble de cas de service pertinents **(128)** à partir de la pluralité de cas de service précédents par une comparaison des valeurs d'attribut identifiées pour les cas de service précédents avec des valeurs d'attribut pour un cas de service actuel **(126)** en utilisant une métrique de comparaison **(132)** et un seuil de pertinence **(134) ;**
tracer, sur le dispositif d'affichage **(105),** une chronologie **(150)** de cas de service pertinents **(140)** de l'ensemble de cas de service pertinents en fonction de dates calendaires des cas de service pertinents, dans lequel le traçage inclut :
tracer, sur le dispositif d'affichage **(105),** une chronologie de maintenance planifiée **(152)** de cas de service planifiés pertinents de l'ensemble de cas de service pertinents **(128)** en fonction de dates calendaires des cas de service planifiés pertinents ;
tracer, sur le dispositif d'affichage **(105),** une chronologie de maintenance non planifiée **(154)** de cas de service non planifiés pertinents de l'ensemble de cas de service pertinents en fonction de dates calendaires des cas de service non planifiés pertinents ; et
tracer des représentations **(164)** des pièces de rechange associées aux cas de service pertinents tracés **(128) ;**
dans lequel la chronologie de maintenance planifiée et la chronologie de maintenance non planifiée présentent des axes temporels alignés ;
afficher, sur le dispositif d'affichage **(105),** la chronologie générée de cas de service et une boîte de dialogue **(160)** d'interface utilisateur graphique (GUI) de pertinence pour l'ajustement par l'utilisateur du seuil de pertinence par l'intermédiaire d'au moins un dispositif d'entrée utilisateur **(103) ;** et
en réponse à l'ajustement par l'utilisateur du seuil de pertinence par l'intermédiaire de la boîte de dialogue GUI de pertinence, la répétition de l'identification et du traçage pour mettre à jour dynamiquement la chronologie tracée sur la base de l'ajustement par l'utilisateur de la métrique de pertinence.

10. Dispositif de service **(102)** selon la revendication 9, dans lequel la boîte de dialogue **(160)** GUI de pertinence inclut :
une barre de curseur configurée pour, lors de la sélection par l'intermédiaire de l'au moins un dispositif d'entrée utilisateur **(103),** ajuster le seuil de pertinence **(134)** entre des attributs **(122)** du cas de service actuel **(126)** et des attributs des cas de service précédents **(124).**

11. Dispositif de service **(102)** selon la revendication 10, dans lequel, lors de l'ajustement du seuil de pertinence **(134)** par l'intermédiaire de la barre de curseur, la chronologie **(150)** est configurée pour s'étendre ou se contracter comme affiché sur le dispositif d'affichage **(105).**

12. Dispositif de service **(102)** selon l'une quelconque des revendications 9-11, dans lequel la chronologie **(150)** comprend :
des icônes **(168)** indiquant les cas de services précédents ;
dans lequel les icônes satisfaisant le seuil de comparaison incluent un codage couleur ou un ombrage.

13. Dispositif de service **(102)** selon la revendication 12, dans lequel lors de la sélection d'une icône **(168)** de la chronologie **(150)** par l'intermédiaire de l'au moins un dispositif d'entrée utilisateur **(103),** l'au moins un processeur électronique **(101)** est programmé pour :
générer, pour l'affichage sur le dispositif d'affichage **(105),** d'une fenêtre incluant des informations relatives à l'icône sélectionnée.

14. Dispositif de service **(102)** selon la revendication 9, dans lequel l'au moins un processeur électronique **(101)** est en outre programmé pour :
commander le dispositif d'affichage **(105)** pour afficher des mises à jour logicielles **(166)** en fonction de dates calendaires des mises à jour logicielles,
dans lequel la chronologie des cas de service pertinents **(128)** et la chronologie de mises à jour logicielles présentent des axes temporels alignés.

15. Procédé de service de dispositif **(200),** comprenant :
l'identification de valeurs d'attribut **(120)** pour des attributs **(122)** d'une pluralité de cas de service précédents **(124)** à partir d'un journal de service **(130)** récupéré à partir d'une base de données **(127) ;**
identifier un ensemble de cas de service pertinents **(128)** à partir de la pluralité de cas de service précédents en comparant les valeurs d'attribut identifiées pour les cas de service précédents avec des valeurs d'attribut pour un cas de service actuel **(126)** en utilisant une métrique de comparaison **(132)** et un seuil de pertinence **(134) ;**
l'extraction de pièces de rechange à partir du journal de service **(130)** incluant l'association de chaque pièce de rechange à un cas de service précédent **(124) ;**
le traçage, sur un dispositif d'affichage **(105),** d'une chronologie **(150)** de cas de service pertinents de l'ensemble de cas de service pertinents en fonction de dates calendaires des cas de service pertinents, la chronologie incluant au moins (i) une chronologie de maintenance planifiée **(152)** de cas de service planifiés pertinents de l'ensemble de cas de service pertinents en fonction de dates calendaires des cas de service planifiés pertinents, (ii) une chronologie de maintenance non planifiée **(154)** de cas de service non planifiés pertinents de l'ensemble de cas de service pertinents en fonction de dates calendaires des cas de service non planifiés pertinents, et le traçage de représentations **(164)** des pièces de rechange associées aux cas de service pertinents tracés **(128),** dans lequel la chronologie de maintenance planifiée et la chronologie de maintenance non planifiée présentent des axes temporels alignés ;
la fourniture, sur le dispositif d'affichage, d'une boîte de dialogue **(160)** d'interface utilisateur graphique (GUI) de pertinence pour l'ajustement par l'utilisateur du seuil de pertinence par l'intermédiaire de l'au moins un dispositif d'entrée utilisateur **(103) ;** et
en réponse à l'ajustement par l'utilisateur du seuil de pertinence par l'intermédiaire de la boîte de dialogue GUI de pertinence, la répétition de l'identification et du traçage pour mettre à jour dynamiquement la chronologie tracée sur la base de l'ajustement par l'utilisateur de la métrique de pertinence.
